# EUROPEAN PATENT APPLICATION

(11) **EP 1 261 180 A2**
(43) Date of publication of application: **27.11.2002**
(21) Application number: 02253339.2
(22) Date of filing: 14.05.2002
(51) Int. Cl.: H04L 12/58, G06F 17/60

(54) **System for personal messaging**

(30) Priority: 23.05.2001 US 863897
(71) Applicant: Nokia Corporation, 02150 Espoo (FI)
(72) Inventor: Karri, Anna, 00210 Helsinki (FI); Lehto, Johannes, 01360 Vantaa (FI); Hämynen, Kimmo, 02210 Espoo (FI); Wasenius, Reidar, 02230 Espoo (FI); Mäkelä, Anu, 02130 Espoo (FI); Keinonen, Turkka, 03150 Huhmari (FI); Torri, Pasi, 00180 Helsinki (FI); Bäckström, Raimo, 02600 Espoo (FI)
(74) Representative: Read, Matthew Charles

(57) **Abstract**

A method and corresponding apparatus and system for conveying a message between sending and receiving terminals of a communication system, the method including the steps of: assembling a plurality of frames of the message in a desired order, at least one frame including text and either a picture or a bookmark to a picture; indicating a recipient of the message; indicating that the message is to be sent to the indicated recipient; wherein the step of indicating that the message is to be sent to the indicated recipient is performed once for all of the frames of the message rather than for each frame of the message, thereby providing to the recipient a message consisting of a plurality of frames in the desired order. The message is provided using a message service such as either the short message service (SMS), extended message service (EMS), or the multimedia messaging service (MMS).

## Description

The present invention relates to providing messages in the form of at least text and pictures from one terminal of a telecommunications system to another. More particularly, the present invention relates to providing a sequence of related such messages in a predetermined order.

In recent years, data services have become popular for mobile communications systems, including the very popular short messaging service (SMS) that employs underutilized bandwidth of signaling channels to allow short text messages. With SMS, users are able to exchange alphanumeric messages (up to 160 characters in length), and the messages are delivered within seconds of their being transmitted. Of course the networks traversed in providing the messages from one user to another must all be digital cellular networks. Although SMS was originally conceived as a paging mechanism for notifying users of the arrival of voicemail, it is now used primarily as a messaging service. A new use for SMS is a picture messaging application for cellular telephones that is presently being offered, allows users to create and download picture messages into his or her proprietary mobile telephone (e.g., Nokia 3210 GSM) and send them to another, like proprietary telephone (another Nokia 3210 or a Nokia 8210 or Nokia 8850). With a likewise proprietary messaging platform (e.g., Nokia Artus Messaging Platform), operators are able to enhance usage of Short Message Service (SMS) for their subscribers. Such a simple graphic message service provides a black-and-white picture, for instance 72 x 28 pixels, along with a short greeting displayed below the picture. A maximum size of the greeting is specified, for example 120 characters.

The picture messaging now available with SMS allows greater expression in some respects than pure text. However, a single picture and associated text tends to be too limiting for conveying even quite simple communications. What is needed is a mechanism that builds on the notion of providing a message as a picture and associated text, such as a mechanism that allows sending several such pictures and associated text.

If a user wishes to send a series of pictures that in combination convey a message, however, the user must pay for each picture and associated text as a separate and distinct SMS message. In addition, for a sender to send to a recipient an ordered sequence of pictures and associated text, what is here called a *funny* (as in the so-called *funnies* of the comics section of some newspapers), the sender must repeat the action required to send the first picture and text for each subsequent picture and text. In other words, the procedure for sending a funny is awkward, including various repetitious acts on the part of the sender. The situation is no less awkward on the receiving side. Moreover, there is no guarantee that on the receiving side the individual SMS messages making up a funny will arrive in the order in which they were sent.

It is known in the art to download actual comic strips from wireless application protocol (WAP) sites, but downloading such comic strips is not a way to provide a message consisting of a sequence of pictures in associated text; the downloaded comics cannot be personalized and sent to a user of another mobile terminal as a single message. Besides, for a mobile telephone to be able to download WAP comics, the mobile telephone must have software designed specifically for that purpose.

What is needed is a way to extend what can be expressed by sending a single picture and associated text, and ideally, a way that does not require of the user or receiver repetitious acts to either send or receive the improved message. More specifically, what is needed is some way to send a series of pictures that in combination make up what is here called a funny and so convey a single complete message, a way that allows the user to send the entire funny as a single message in that the user is not required to perform the same action for transmitting each picture and text, and likewise the recipient is able to receive and display the funny as a single message, although only part of the message would usually be viewable at any one time.

Accordingly, the present invention provides a method and corresponding apparatus and system for conveying a message from a sending terminal to a receiving terminal over a telecommunications system that is at least in part a wireless telecommunications system, the method including the steps of: assembling a plurality of frames of the message in a desired order, at least one frame including text and either a picture or a bookmark to a picture; indicating a recipient of the message; indicating that the message is to be sent to the indicated recipient; wherein the step of indicating that the message is to be sent to the indicated recipient is performed once for all of the frames of the message rather than for each frame of the message, thereby providing to the recipient a message consisting of a plurality of frames in the desired order.

In a further aspect of the invention, the method also includes the step of preparing a frame of the message by indicating a picture to be displayed in the frame and by providing text to be displayed in the frame.

In another further aspect of the invention, the method also includes the step of downloading from a service an already-created message and editing the text of a frame of the message to personalize the message for use as a message to an assumed operator of the receiving terminal.

In yet another further aspect of the invention, the method also includes the step of downloading from a service or retrieving from stored memory of the sending terminal an already-created picture for use as the picture of a frame of the message and providing text to be associated with the picture.

In yet still another further aspect of the invention, the message is provided using a pre-existing message service such as either the short message service (SMS), extended message service (EMS), or the multimedia messaging service (MMS).

In yet still even another further aspect of the invention, the message consists of three ordered frames, each frame consisting of a picture and associated text personalized for an intended recipient.

And in still even yet another further aspect of the invention, the message is protected from being copied using a form of protections selected from the group consisting of: copy protection, digital rights management, and encryption.

And in still yet even another further aspect of the invention, the method also includes the step of associating with a frame of the message a special effect to be performed when the frame is displayed; in a still further aspect of the invention, the method also includes the step of reviewing properties of a frame of the message, including whether or not a special effect has been associated with the frame; and in another still further aspect of the invention, the special effect is selected from the group consisting of vibrating the frame, providing a sound when the frame is first displayed, providing a sound when the frame is closed, opening the frame in stages, and closing the frame in stages.

The above and other objects, features and advantages of the invention will become apparent from a consideration of the subsequent detailed description presented in connection with accompanying drawings, in which:
Fig. 1 is an example of a so-called funny being displayed on the screen of a mobile terminal (the pictures being displayed in succession, one at a time);
Fig. 2 is an image of the screen of a mobile terminal showing two different funnies, each funny being shown one picture at a time and each funny including three pictures and associated text;
Fig. 3 is even yet another example of a funny being displayed on the screen of a mobile terminal, but here the funny serves as a puzzle, not a usual type of (personalized) message;
Fig. 4 is a flowchart of a method of communicating a message according to the invention; and
Fig. 5 is a block diagram of a system allowing a user of a mobile terminal to communicate a message according to the invention.

The invention will now be described in the context in which messages are being communicated between mobile terminal over a cellular communication system. As is clear from what follows, however, the invention applies also to the communication of a message between two terminals only one of which is portable, over a communication system that is only at least in part a cellular or wireless communication system.

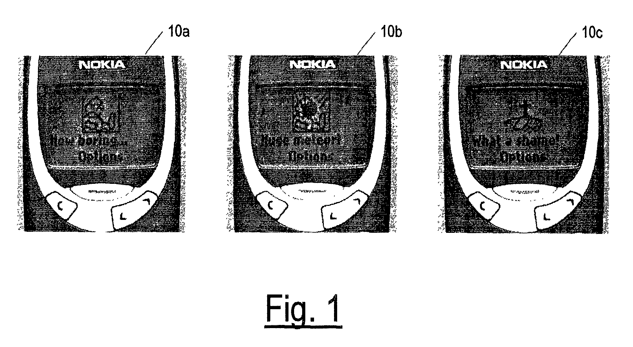

Referring now to Fig. 1, according to the invention the display of a mobile terminal can be used to display a sequence of pictures and associated text that in combination and in a particular order make up a message that can be sent to another mobile terminal. Such an ordered sequence of pictures and associated text make up what is here called a *funny*, using the term funny in the sense of a comic strip, which usually consists of three individual frames, each frame including a picture and associated text. Thus, Fig. 1 shows a message according to the invention consisting of three frames 10a 10b 10c, the text for the first frame beginning "How boring ... ," the text for the next frame beginning "Huge meteor!", and so on. A funny according to the invention can also include special effects such as sound and vibration effects or even animated funnies (i.e. funnies with moving pictures), so as to provide messages that can be even more expressive than messages consisting of only text and pictures (the special effects of course being provided at additional cost to the sender in view of the greater bandwidth consumed, but in the preferred embodiment the creator of a funny is able to determine the cost/ charge for any special effect the creator might want to include as part of the funny). Most importantly, according to the invention, the user assembles pictures (usually selecting the pictures from a library of images) and provides associated text so as to create a single, personalized message. Such messages (funnies) can be created and sent using either a mobile terminal or using a desktop or web application, instead of a mobile terminal.

An important aspect of the invention is that funnies according to the invention are preferably implemented based on the existing short message service (SMS) in a way that allows sending and receiving funnies using equipment with the functionality to make use of the SMS picture messaging.

As an alternative to the preferred embodiment of sending funnies based on SMS picture messaging, a funny can be sent using wireless application protocol (WAP) bookmarks so that an intended recipient of a funny would download pictures using WAP (instead of having the pictures conveyed by SMS, which would simply convey the bookmarks and associated text for each bookmark). The disadvantage of providing funnies based on WAP is that it is likely that the cost to the user would be greater than funnies based (purely) on SMS. In another, alternative embodiment, a funny can be sent using the so-called multimedia messaging service (MMS) or extended message service (EMS), as opposed to SMS. Both MMS and EMS include provisions for easily conveying more than simple pictures and text, so that more complex pictures and special effects could be included in a funny more easily than when using SMS. However, SMS is (at least now) the preferred embodiment because it is now widely used.

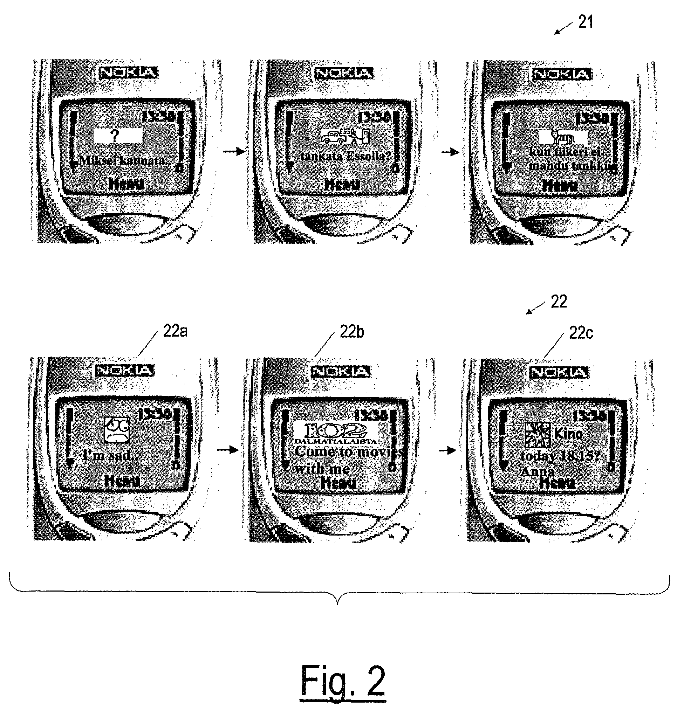

Referring now to Fig. 2, two messages according to the invention are shown, each consisting of an ordered sequence of three pictures with associated text. The first message 21 is in Finnish. The second message 22 illustrates quite clearly the use of the three-picture comic strip format to communicate very expressively a message from one user to another, in this case the message asking in a very expressive way if the receiver of the message would like to go to the movies with the sender. In the second frame of the funny a picture is provided indicating that the name of the movie is "102 Dalmatians" (in Finnish). In another aspect of the invention, such a picture is downloaded by a user from a service providing pictures that include pictures given to the service by a company wishing to in essence advertise a product, in the example given. Since in a still further aspect of the invention, a funny can be saved by a recipient, modified, and sent to a third party, a company can in principle have its advertisement (the picture it provides to the service) used over and over again.

Still referring to Fig. 2, for ease of description, as in a newspaper comic or funny, the second funny 22 of the invention is said to consist of individual frames 22a 22b 22c, each frame providing a picture and associated text. Each (normal-length) frame of a funny according to the invention can be conveyed for a fraction of the cost of a single SMS picture message provided for example by a Nokia 3210, which uses three SMS messages to convey one picture message (where here, at least for some frames that are not too long, each frame is conveyed by a single SMS message). The present invention also comprehends funnies including frames at least some of which are too long to be conveyed as a single SMS message. Thus, for example, a funny according to the invention could consist of a first normal-length frame, conveyed as a single SMS message, a second, long frame, conveyed as three SMS messages, and a third, normal-length frame conveyed as a single SMS message.

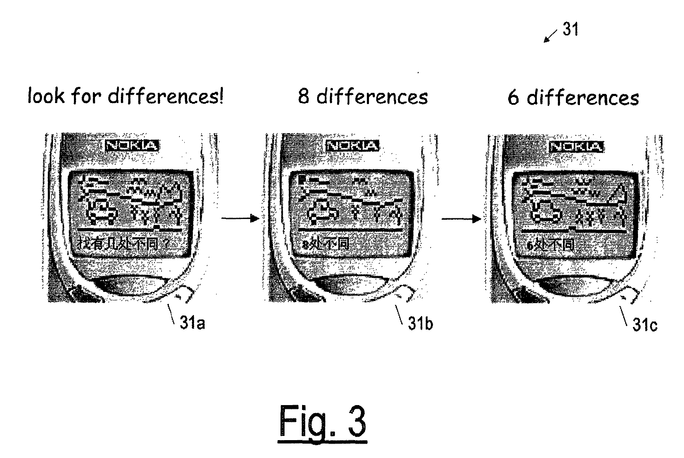

Referring now to Fig. 3, an example of the use of a funny 31 (in Japanese) as a puzzle is illustrated, in contrast with the use of a funny to send a personalized message. The first frame 31a of the funny instructs the receiver of the funny to look for differences between what is shown in the picture of the first frame and the pictures that follow in the second and third frames 31b 31c. The number of differences is indicated below the pictures of the second and third frames.

A funny of course can consist of other than three frames. For example, two frames may sometimes be appropriate and in some situations four frames are more appropriate.

According to the invention, in a preferred embodiment the receiver of a funny would receive a notification that they have received a funny (as opposed to a single SMS picture message or some other form of message), so that the receiver understands that what has been received is an ordered sequence of frames. According to the invention, the sender and receiver equipment includes a capability to handle the three ordered frames of a funny as a single object, maintaining the correct order of the frames. In addition, a mobile terminal (or other equipment used to send and receive funnies) would be able to save a funny as such (i.e. as a single object) for later display or for later sending the funny to someone else. Moreover, in the preferred embodiment, all of the funnies that are stored in a mobile terminal or other equipment would display on a menu funnies stored in the equipment or available from a service so that the user can select a funny using a pointer or indicator means provided with the equipment, rather than having to type in a description of the funny in order to retrieve it. The retrieved funny then displays on the mobile terminal or other equipment. In addition, rather than actually reviewing the funny, a user would be able to display properties of a funny, i.e. whether the funny includes not only pictures and associated text, but also sounds and vibrations and possibly other effects.

It is an aspect of the invention, at least in the preferred embodiment, that after viewing the first frame of a funny, each subsequent frame can be made to display by pressing a single key of the equipment used to display the funny. This is as opposed to what would be possible using the SMS picture message service, in which each picture message is treated as an independent single entity. In addition, the user wishing to send a funny to another user is able to do so by pressing a small number of keys directed to indicating to the equipment that a particular funny is to be sent, and not having to indicate to the equipment each frame of the funny in the order in which the frame is to be sent, that order having already been established in creating the funny.

In the preferred embodiment, the equipment operated by a user sending and receiving funnies includes a funny composer enabling the user to compose funnies based on existing picture messages, clipart, and other existing funnies, and in particular allowing the customer to edit the text in each. As mentioned above, a user can also add special effects to frames such as instructions to vibrate a frame when displaying it or to make a sound when first displaying (opening) or closing a frame. Even more exotic special effects are possible, such as having a frame fade out, pixel by pixel.

As indicated above, in one embodiment of the invention, and in fact in the preferred embodiment, users subscribe to a service allowing them to download pictures. In addition, users can download from the service complete funnies, personalize them, and send them to friends. Such a service allows companies wishing to advertise products or services to provide not only pictures but entire funnies aimed at influencing the actions of a consumer. Thus, for example, a company that has made a movie might provide an entire funny for downloading so that a user could download the funny and send it to another user asking the other user if he or she would like to go to the movie made by the company.

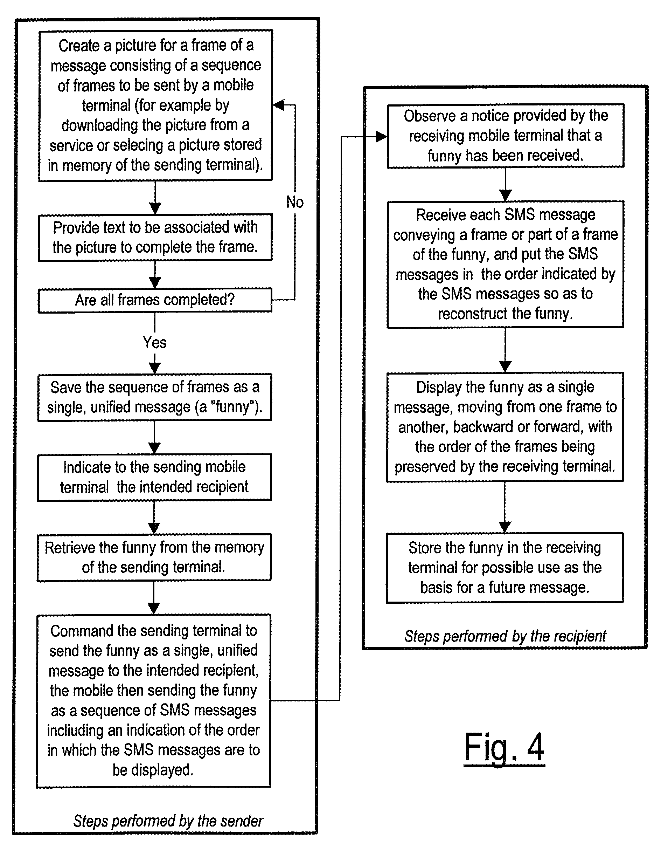

Referring now to Fig. 4, a flowchart is provided of a method for communicating a message according to the invention, as described above, from a sending mobile terminal to a receiving mobile terminal over a communications path provided by a wireless communications network, such as a GSM network. It is indicated in the flowchart that in sending a funny, the funny is sent as a single, unified message as far as the sender is concerned. It is also indicated that at a more detailed level, a funny is communicated (in the preferred embodiment) as a sequence of SMS messages. Each such SMS message conveys a part of the funny and includes some information used by the receiving terminal to order the SMS message so as to be able to reconstruct the funny.

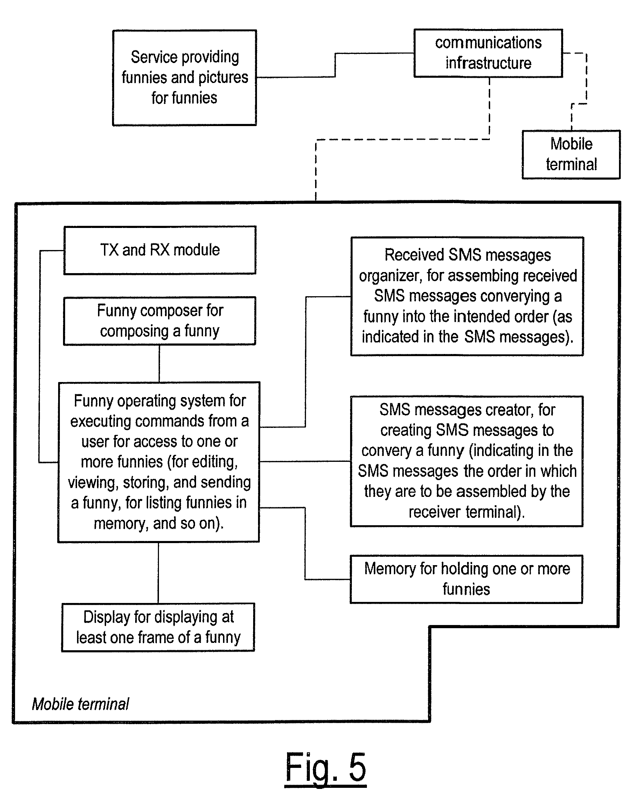

Referring now to Fig. 5, a block diagram is provided of a system allowing a user using a mobile terminal (as part of the system) to communicate a message according to the invention. As shown in Fig. 5, besides including a transmitter and receiver module for receiving a funny, a mobile terminal according to the invention includes a funny composer that enables a user to compose a funny (possibly by altering an existing funny or by pasting into the frames of the funny being created a picture downloaded from a service), a (non-volatile) memory for holding one or more funnies, a display (a screen) for displaying at least one frame of a funny at a time (and optionally a wide display for displaying an entire funny all at once), and a funny operating system, for executing commands from a user for access to one or more funnies, commands for editing, viewing, storing, and sending a funny, or for listing funnies in memory, and so on. As shown, such a mobile terminal also includes a module for creating SMS messages (in the preferred embodiment, or EMS or MMS messages in other environments) corresponding to the funny (usually one SMS message per frame of a funny, but some frames could be so long that several SMS messages must be created to convey them), the module indicating in each SMS message the position of the SMS messages in the ordered sequence of SMS messages that must be conveyed to convey the ordered sequence of frames of a funny. Finally as shown, such a mobile terminal also includes a module for assembling received SMS messages in the order indicated in the SMS messages so as to be able to reconstruct a funny as a single, unified message. In addition, the system includes a service for providing funnies that can be downloaded by a user into a mobile terminal and then altered to personalize them for use as a personal message to someone, or used as is.

As indicated above, according to the invention, in viewing the frames of a funny, a person is able to move to the next frame or to the previous frame by pressing preferably a single indicator on the equipment displaying the funny. Preferably, the mobile terminal used to create a funny includes a library of perhaps 50 to 100 pictures for including in the frame of a funny. In creating a new funny, a user preferably is able to indicate a default size for each frame, either standard (able to be conveyed by one SMS message), double (two SMS messages in length) or maximum (three or some other predetermined number of SMS messages). Preferably also, the user is able to select a default language to be used for the text of a new funny. Also, when creating a new funny (including creating a funny based on an existing, stored funny), a user is preferably able to reorder the frames of the funny at any time while creating the new funny. In addition, a user is preferably able to indicate a title or name for a funny to make it convenient to refer to the funny. Finally, preferably, a user is able to indicate that a funny display as a so-called slide show, i.e. so that the recipient need not indicate that the receiving equipment display successive frames of a received funny, but instead so that the receiving equipment automatically displays each successive frame according to instructions to the receiving equipment included with the funny.

In some instances, it is desirable to have one or another form of copy protection for a funny. Accordingly, a funny according to the invention is protectable, in some embodiments, using either: so-called digital rights management (DRM) (extensions of standard copy protection, including for example having what is protected be decrypted in real-time but never stored in other than encrypted form, although sometimes allowing a preview if copied); standard copy protection (requiring a key to copy); or encryption. Encryption provides not only what is effectively copy protection (since even though an encrypted funny could be copied, it could not then be read) but also privacy (in that even an intercepted funny could not be read by an unintended recipient).

It should be understood that a funny according to the invention can be exchanged not only between mobile terminals, but also between landline terminals, and can be exchanged not only through a wireless network, but also via a wireline network. For example, according to the invention a funny can be created using a desktop PC (personal computer) and sent to a mobile terminal; such a mode of use is expected to be common in the case of sending animated funnies.

### Scope of the Invention

It is to be understood that the above-described arrangements are only illustrative of the application of the principles of the present invention. Numerous modifications and alternative arrangements may be devised by those skilled in the art without departing from the scope of the present invention, and the appended claims are intended to cover such modifications and arrangements.

## Claims

1. A method for conveying a message from a sending terminal to a receiving terminal over a telecommunications system that is at least in part a wireless telecommunications system, the method comprising the steps of:
a) assembling a plurality of frames of the message in a desired order, at least one frame including text and either a picture or a bookmark to a picture;
b) indicating a recipient of the message; and
c) indicating that the message is to be sent to the indicated recipient;
wherein the step of indicating that the message is to be sent to the indicated recipient is performed once for all of the frames of the message rather than for each frame of the message, thereby providing to the recipient a message consisting of a plurality of frames in the desired order.

2. The method of claim 1, further comprising the step of associating with a frame of the message a special effect to be performed when the frame is displayed.

3. The method of claim 2, further comprising the step of reviewing properties of a frame of the message, including whether or not a special effect has been associated with the frame.

4. The method of claim 2, wherein the special effect is selected from the group consisting of vibrating the frame, providing a sound when the frame is first displayed, providing a sound when the frame is closed, opening the frame in stages, and closing the frame in stages.

5. The method of any preceding claim, further comprising the step of preparing a frame of the message by indicating a picture to be displayed in the frame and by providing text to be displayed in the frame.

6. The method of any preceding claim, further comprising the step of downloading from a service an already-created message and editing text of a frame of the message to personalize the message for use as a message to an assumed operator of the receiving terminal.

7. The method of any preceding claim, further comprising the step of downloading from a service or retrieving from stored memory of the sending terminal an already-created picture for use as the picture of a frame of the message and providing text to be associated with the picture.

8. The method of any preceding claim, wherein the message is provided using a pre-existing message service selected from the group consisting of short message service (SMS), extended message service (EMS), and multimedia messaging service (MMS).

9. The method of any preceding claim, wherein the message consists of three ordered frames, each frame consisting of a picture and associated text personalized for an intended recipient.

10. The method of any preceding claim, wherein the message is protected from being copied using a form of protection selected from the group consisting of: copy protection, digital rights management, and encryption.

11. An apparatus for conveying an ordered sequence of frames of a message, at least one frame including both a picture and associated text, the message being conveyed at least in part using a bearer service of a wireless communications network, the apparatus comprising.
a) means for assembling a plurality of frames of the message in a desired order, at least one frame including text and either a picture or a bookmark to a picture;
b) means for indicating a recipient of the message;
c) means for indicating that the message is to be sent to the indicated recipient;
wherein the means for indicating that the message is to be sent to the indicated recipient requires on the part of a sender a single action to be performed for all of the frames of the message rather than for each frame of the message, thereby providing to the recipient a message consisting of a plurality of frames in the desired order.

12. The apparatus of claim 11, further comprising means for associating with a frame of the message a special effect to be performed when the frame is displayed.

13. The apparatus of claim 12, further comprising means for reviewing properties of a frame of the message, including whether or not a special effect has been associated with the frame.

14. The apparatus of claim 12, wherein the special effect is selected from the group consisting of vibrating the frame, providing a sound when the frame is first displayed, providing a sound when the frame is closed, opening the frame in stages, and closing the frame in stages.

15. The apparatus of any one of claims 11 to 14, further comprising means for preparing a frame of the message by indicating a picture to be displayed in the frame and by providing text to be displayed in the frame.

16. The apparatus of any one of claims 11 to 15, further comprising means for downloading from a service an already-created message and editing the text of a frame of the message to personalize the message for use as a message to the indicated recipient.

17. The apparatus of any one of claims 11 to 16, further comprising means for downloading from a service or retrieving from stored memory of the apparatus an already-created picture for use as the picture of a frame of the message and providing text to be associated with the picture.

18. The apparatus of any one of claims 11 to 17, wherein the message is provided using a pre-existing message service selected from the group consisting of short message service (SMS), extended message service (EMS) and multimedia messaging service (MMS).

19. The apparatus of any one of claims 11 to 18, wherein the message consists of three ordered frames, each frame consisting of a picture and associated text personalized for the indicated recipient.

20. The apparatus of any one of claims 11 to 19, wherein the message is protected from being copied using a form of protection selected from the group consisting of: copy protection, digital rights management, and encryption.

21. A system, comprising:
i) an apparatus for conveying an ordered sequence of frames of a message, at least one frame including both a picture and associated text, the message being conveyed at least in part using a bearer service of a wireless communications network, the apparatus comprising:
a) means for assembling a plurality of frames of the message in a desired order, at least one frame including text and either a picture or a bookmark to a picture;
b) means for indicating a recipient of the message;
c) means for indicating that the message is to be sent to the indicated recipient;
wherein the means for indicating that the message is to be sent to the indicated recipient requires on the part of a sender a single action to be performed for all of the frames of the message rather than for each frame of the message; and
ii) means for providing a picture in response to a request for the picture; thereby providing to the recipient a message consisting of a plurality of frames in the desired order.

22. The system of claim 21, wherein the means for providing a picture in response to a request for the picture does so in response to a bookmark according to the wireless application protocol (WAP).

23. The system of claim 21, wherein the means for providing a picture in response to a request for the picture does so in response to an indication that the picture be downloaded for use in a message being composed.
